# EUROPÄISCHE PATENTSCHRIFT

(11) **EP 1 477 365 B1**
(45) Veröffentlichungstag und Bekanntmachung des Hinweises auf die Patenterteilung: **01.03.2006**
(21) Anmeldenummer: 04011369.8
(22) Anmeldetag: 13.05.2004
(51) Int. Cl.: B60R 9/055

(54) **Halterungsvorrichtung für Dachkoffer**
Fastening device for roof box
Dispositif de fixation pour un coffre de toit

(30) Priorität: 13.05.2003 DE 10321347
(43) Veröffentlichungstag der Anmeldung: 17.11.2004
(73) Patentinhaber: Lieb, Willi, 92360 Mühlhausen (DE)
(72) Erfinder: Lieb, Willi, 92360 Mühlhausen (DE)
(74) Vertreter: Blaumeier, Jörg

(56) Entgegenhaltungen:
- EP-A- 0 983 903
- EP-A- 1 284 218
- WO-A-97/11865
- DE-C- 19 526 477
- DE-U- 8 536 579

## Beschreibung

Die Erfindung bezieht sich auf eine Halterungsvorrichtung zur lösbaren, verstellbaren Schnellhalterung eines Dachkoffers an auf einem Fahrzeugdach befestigten Querträgern, mit den Boden des Dachkoffers durchsetzenden nach oben verspannbaren, die Querträger mit einem abgewinkelten Klemmschenkel untergreifenden Zugbügeln, wobei ein mit einer Außenverzahnung versehener ZugSchenkel des Zugbügels durch einen mit einem Gegenverzahnungsteil zusammenwirkenden an einem gemeinsamen Trägerteil im Inneren des Dachkoffers gelagerten Spannhebel nach oben anhebbar und dabei in der angehobenen Stellung verriegelbar ist.

Derartige Halterungsvorrichtungen sind bereits in den unterschiedlichsten Ausführungsformen bekannt geworden. Wir verweisen hierzu beispielsweise auf die DE 195 26 477 C1 und die DE 100 48 017 A1. Allen diesen Konstruktionen ist gemeinsam, dass der Zugbügel ein U-förmiger Bügel ist, der von unten über die Querträger auf dem Fahrzeugdach gesteckt werden muss. Dieses notwendige Durchstecken von unten erschwert die Montage, da dieses Durchstecken zum einen in dem begrenzten Raum zwischen Fahrzeugdach und Koffer stattfinden muss und dabei gleichzeitig auch eine zumindest Vorfixierung des durchgesteckten Bügels erfolgen muss, die entweder ein gleichzeitiges Eingreifen in den offenen Dachkoffer oder sonstige aufwändige Fixiereinrichtungen erforderlich macht.

Um dieses umständliche Aufsetzen des Dachkoffers, das bei nahezu allen gängigen derzeit auf dem Markt befindlichen Konstruktionen verwendet wird, zu vermeiden, ist in der DE 38 17 470 C2 zwar bereits eine Halterungsvorrichtung für Dachkoffer bekannt geworden, bei der die U-Bügel aus zwei mit dem unteren Klemmschenkel verbindbaren Zugbolzen bestehen, von denen der eine aus dem Klemmschenkel aushakbar ist. Diese Konstruktion eignet sich zum einen nicht für die heutzutage üblichen Schnellverschlusseinrichtungen mit einem Spannhebel, der an Außenverzahnungen der Zugschenkel angreift. Zum anderen muss auch in diesem Fall wiederum ein umständliches Einhaken nach dem Aufsetzen des Dachkoffers durch Eingriff zwischen Dachkoffer und Fahrzeugdach erfolgen.

Der Erfindung liegt daher die Aufgabe zugrunde, eine Halterungsvorrichtung der eingangs genannten Art so auszugestalten, dass ein einfaches Aufsetzen und In-Positon-Schieben des Dachkoffers ausreicht, um anschließend mithilfe der Spannhebel die endgültige Befestigung zu erreichen, ohne dass von unten die Zugbügel in irgend einer Weise durchgefädelt und über die Querträger gesteckt werden müssen.

Zur Lösung dieser Aufgabe ist erfindungsgemäß vorgesehen, dass der Zugbügel ein L-Bügel ist und dass am Trägerteil ein durch einen Bodenschlitz vor das freie Ende des Klemmschenkels ausschwenkbarer und in dieser Stellung verriegelbarer Verschluss-Schenkel gelagert ist, der über den Spannhebel oder den schwenkbar oder horizontal verschiebbar gelagerten Zugbügel betätigt und ver- bzw. entriegelt wird.

Durch die erfindungsgemäße Ausbildung, bei der die üblicherweise vorgesehenen vier Halterungsvorrichtungen für einen Dachkoffer so ausgerichtet sind, dass die L-förmigen Bügel mit ihrer Öffnungsseite alle in die gleiche Richtung weisen, genügt es den Dachkoffer auf die Querträger am Kraftfahrzeugdach aufzusetzen und einfach in Anlagestellung der Zugschenkel an den Querträgern zu verschieben. Beim anschließenden Verschwenken der Spannhebel, mithilfe deren die Klemmschenkel unter die Querträger verspannt werden, schwenkt der Verschluss-Schenkel aus, sodass sich funktionsmäßig dann doch wieder etwas ähnliches wie bei einem U-Bügel ergibt, das heißt, es besteht auch eine Sicherung gegen Verschiebungen entgegen der vorstehend beschriebenen Montageaufschiebestellung. Dies verhindert zusätzlich zu der Klemmwirkung der Klemmschenkel ein Abheben eines Dachkoffers beispielsweise bei Unfällen. Zweckmäßigerweise wählt man dabei die Orientierung der L-Bügel der Halterungsvorrichtungen so, dass die offene Seite in Fahrtrichtung weist, sodass bei sehr starkem Abbremsen, beispielsweise bei einem Unfall, der Zugschenkel des L-Bügels am Querträger anliegt und somit ein Herunterrutschen sicher verhindert ist. Der Verschluss-Scherikel braucht nur Verschiebungen in der Gegenrichtung abzufangen, die aber sowohl im Normalbetrieb des Kraftfahrzeugs als auch bei Unfällen in dieser Richtung meist sehr viel kleiner sind.

Anstelle der Betätigung des Verschluss-Schenkels gleichzeitig mit der Betätigung des Spannhebels, kann in Weiterbildung der Erfindung auch vorgesehen sein, dass der Verschluss-Schenkel dadurch betätigt wird, dass der Zugbügel beim Aufschieben des Dachkoffers auf die Querträger an den Querträger anstößt und dabei durch schwenkbare oder horizontal verschiebbare Lagerung verschwenkt oder verschoben wird, um auf diese Art und Weise die Auslösebewegung für den Verschluss-Schenkel zu erzielen. Diese Anordnung hat dabei den Vorteil, dass für diese Art der Auslösung zwangsweise der Dachkoffer in die genannte Anlagestellung verschoben werden muss, sodass der Zugbügel mit seinem vertikalen Schenkel am Querträger anliegt und somit bei Unfällen überhaupt kein Spielweg für ein etwaiges Verrutschen zur Verfügung steht.

In Ausgestaltung der Erfindung kann dabei vorgesehen sein, dass der durch eine Feder in die Ausschwenkstellung vorgespannte Verschluss-Schenkel ein zweiarmiger Hebel ist, dessen kurzer Innenschenkel von einem federnd in die Sperrstellung vorgespannten Arretierschieber übergriffen wird, der durch die Verschwenkung des Spannhebels in die Spannstellung in eine Freigabestellung verschiebbar ist.

Sobald der Spannhebel betätigt wird, zieht er den Arretierschieber mit zurück, sodass der unter der Wirkung einer Ausschwenkfeder stehende Verschluss-Schenkel nach außen schwenken kann, wobei es sich als besonders zweckmäßig erwiesen hat, wenn das freie Ende des Klemmschenkels in eine, vorzugsweise nutförmige, Vertiefung des Verschluss-Schenkels eingreift.

Zur Sicherung des Verschluss-Schenkels in der ausgeschwenkten Betriebsstellung kann gemäß einem weiteren Merkmal der vorliegenden Erfindung sehr einfach vorgesehen sein, dass ein Verriegelungsansatz des Spannhebels in der Spannstellung den kurzen Innenschenkel des Verschluss-Schenkels verriegelnd hintergreift.

Zur Erzielung einer zusätzlichen Sicherung kann dabei in an sich bekannter Weise auch noch ein verschwenkbarer Sicherungsbügel für den Spannhebel vorgesehen sein, der ein ungewolltes Aufspringen des Spannhebels, beispielsweise durch sich verschiebendes Gepäck im Inneren des Dachkoffers, sicher verhindern kann.

Obgleich für die Anhebung und Arretierung des Zugschenkels des L-Bügels aus dem Stand der Technik eine Vielzahl von unterschiedlichen Konstruktionsvarianten zur Verfügung stehen, die eine Umsetzung der Schwenkbewegung des Spannhebels in eine solche Anhebebewegung zulassen, hat es sich in Ausgestaltung der Erfindung als besonders zweckmäßig erwiesen, dass der Spannhebel mit Nocken zur Betätigung eines Anhebeschiebers für das Gegenverzahnungsteil entgegen einer Rückholfeder sowie zu dessen Abheben aus der Eingriffsverzahnung versehen ist.

Wird der Spannhebel in die Verschluss-Stellung verschwenkt, so verschiebt er den Anhebeschieber, der das Gegenverzahnungsteil untergreifend dieses damit gleichzeitig anhebt und an die Verzahnung des Zugschenkels andrückt. Durch eine leichte Klemmwirkung kann dabei sichergestellt werden, dass der L-Bügel nicht einfach nach unten rutscht, wenn die Wirkung des Spannhebels wieder aufgehoben wird, sodass durch mehrfache Betätigung schrittweise ein stärkeres Anheben möglich ist. Mit der Verschwenkung des Spannhebels in die Öffnungsstellung wird durch einen entsprechenden Nocken das Gegenverzahnungsteil aus der Eingriffsverzahnung mit der Verzahnung des Spannschenkels abgehoben.

Mit ganz besonderem Vorteil kann gemäß einem weiteren Merkmal der vorliegenden Erfindung vorgesehen sein, dass die Außenverzahnung des Zugbügels nicht wie bei bekannten Halterungsvorrichtungen unmittelbar am metallischen Zugbügel angeformt ist, sondern dass sie durch eine gleitend verschiebbar auf dem glatten Zugschenkel angeordnete, vorzugsweise aus Kunststoff bestehende, Hülse mit angeformten Zähnen gebildet ist, und dass der Zugschenkel durch eine sich zwischen einem endseitigen Kopf und der Hülse abstützende Druckfeder mit einer Schulter an einen Endbegrenzungsanschlag seines Verschiebeweges in der Hülse verspannt ist. Diese Ausbildung hat den ganz besonderen Vorteil, dass auf diese Art und Weise ein federndes Verspannen des Zugbügels entsprechend der eingestellten Federstärke der Druckfeder möglich ist, während bei den bekannten Anordnungen immer nur ein schrittweises Verstellen um den Abstand zweier Zähne möglich war, sodass damit auch Überlastungen auftreten konnten. Die Druckfeder bietet aber die Möglichkeit, dass der eigentliche Zugbügel sich in der zur Bildung seiner Außenverzahnung dienenden Hülse gegen die Federkraft nach außen verschiebt und so ein federndes Verspannen ohne solche Überlastungen erreicht.

Dabei kann weiter vorgesehen sein, dass der einen rechteckigen Querschnitt aufweisende Zugbügel am freien inneren Ende des Zugschenkels mit einem vorzugsweise verjüngten Abschnitt mit einem endseitigen Gewinde für eine den Kopf bildende Schraubmutter versehen ist. Die Rechteckform des Querschnitts des Zugbügels hat dabei zusätzlich den Sinn, dass sich hierdurch eine Verdrehsicherung ergibt, was im Hinblick auf das gewünschte Aufschieben mit in eine gemeinsame Öffnungsrichtung vororientierten L-Bügeln der vier üblicherweise verwendeten Halterungsvorrichtungen eines Dachkoffers zweckmäßig ist.

Schließlich liegt es noch im Rahmen der Erfindung, dass der Zugschenkel eine Führungsnut für eine Führungsrippe an der Hülse aufweist, deren Endschulter durch die Druckfeder an die Endfläche der Führungsrippe angedrückt wird.

Weitere Vorteile, Merkmale und Einzelheiten der Erfindung ergeben sich aus der nachfolgenden Beschreibung eines Ausführungsbeispiets sowie anhand der Zeichnung. Dabei zeigen:
- Fig. 1: eine Seitenansicht eines Kraftfahrzeugdachs mit einem Dachkoffer mit erfindungsgemäßen Halterungsvorrichtungen nach dem Aufsetzen und vor dem Einschieben in die Anlagebetriebsstellung der Zugschenkel,
- Fig. 2: eine der Fig. 1 entsprechende Seitenansicht in der Betriebsstellung mit ausgeschwenkten Verschluss-Schenkeln,
- Fig. 3 und 4: vergrößerte Seitenansichten einer Halterungsvorrichtung einmal in der Vorbetriebsstellung nach Fig. 1 und zum anderen in der Betriebsstellung nach Fig. 2,
- Fig. 5: eine perspektivische Ansicht einer erfindungsgemäßen Halterungsvorrichtung in Öffnungsstellung,
- Fig. 6: eine teilweise aufgebrochene Seitenansicht einer erfindungsgemäßen Halterungsvorrichtung in dieser Öffnungsstellung nach Fig. 5,
- Fig. 7: eine der Fig. 6 entsprechende Ansicht in der Betriebsstellung der Halterungsvorrichtung mit auf dem Querträger verspanntem L-Bügel,
- Fig. 8: eine teilweise aufgebrochene Seitenansicht des Zugschenkels des L-Bügels mit aufgeschobener die Verzahnung bildenden Kunststoffhülse,
- Fig. 9: eine der Fig. 8 entsprechende Ansicht mit teilweise herausgezogenem Zugschenkel infolge starker Spannbelastung durch die Anlage des Klemmschenkels unter dem Querträger und
- Fig. 10: eine Aufsicht auf die Anordnung nach den Figuren 8 und 9 bei abgenommener Mutter und abgenommener Druckfeder.

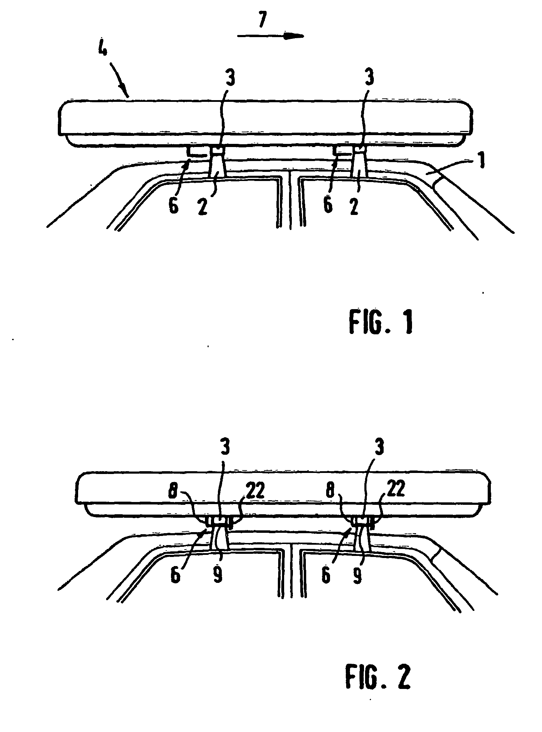

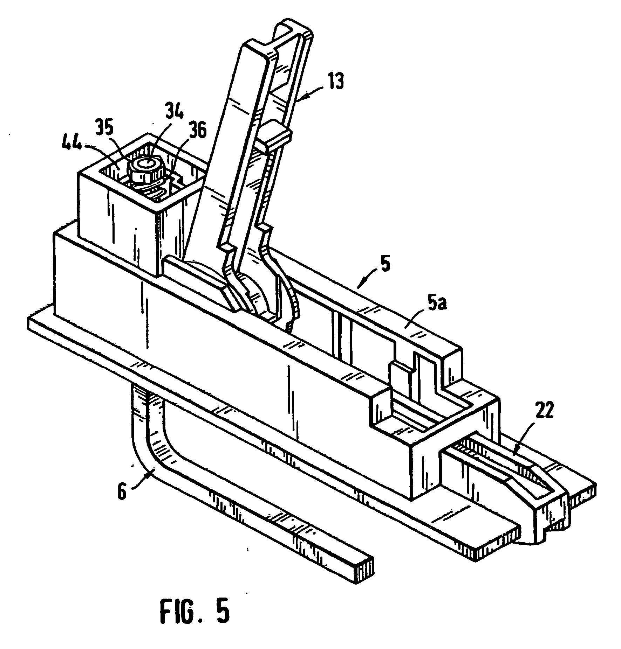

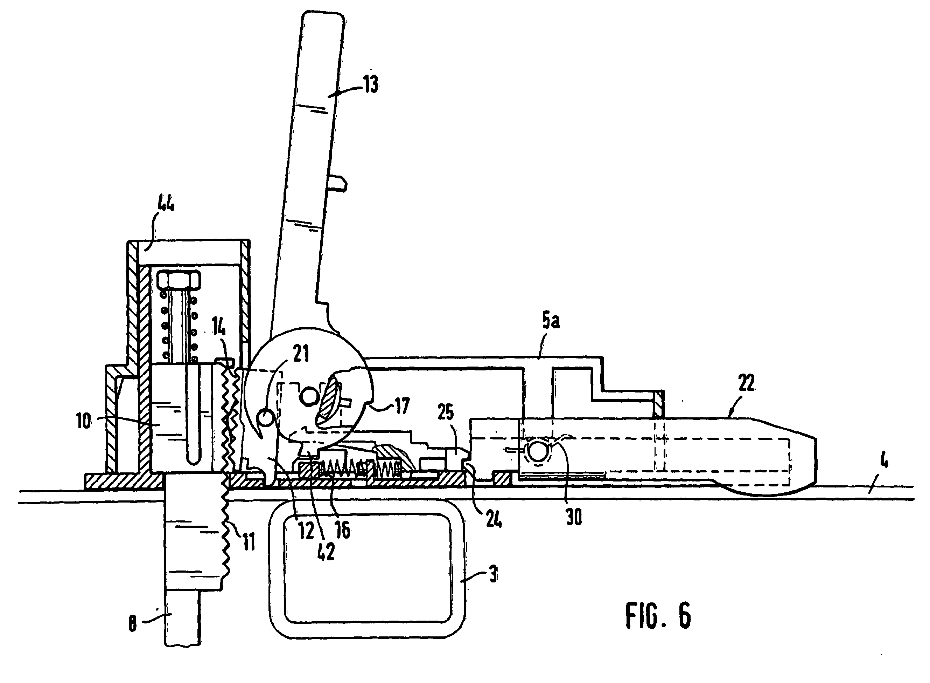

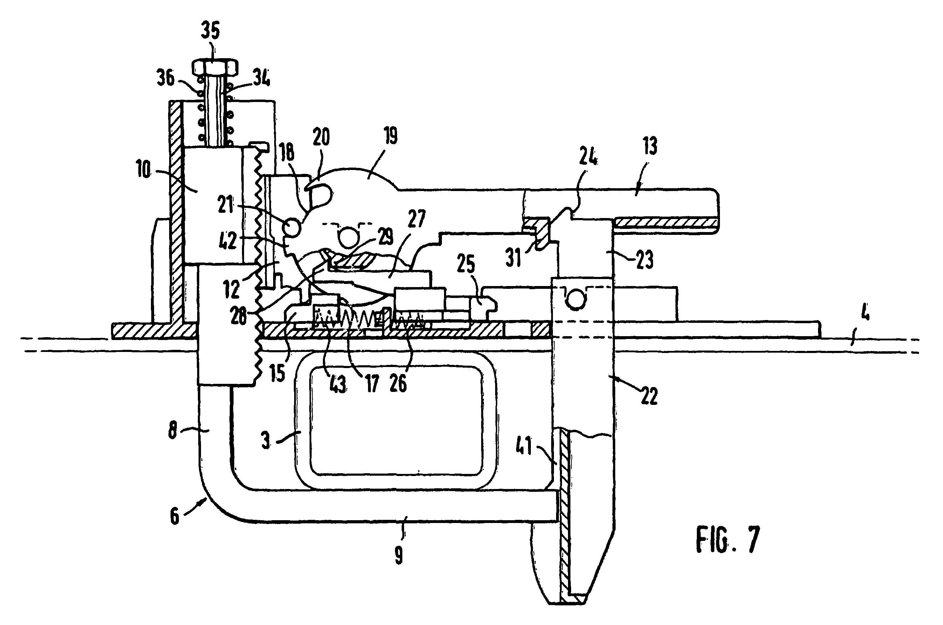

In der Figur 1 erkennt man ein Kraftfahrzeugdach 1, auf dem mithilfe von Stützstreben 2 zwei beabstandete Querträger 3 in Abstand vom Fahrzeugdach gehaltert sind, auf denen ein Dachkoffer 4 gehaltert werden soll. Zu diesem Zweck sind vier Halterungsvorrichtungen 5 mit einem Trägerteil 5a, wie eine beispielsweise in Fig. 5 zu erkennen ist, im Inneren des Dächkoffers montiert, wobei die L-förmigen Zugbügel 6 nach unten ragen und dabei mit ihrer Öffnungsseite alle in die gleiche Richtung, im gezeigten Ausführungsbeispiel der Fig. 1 nach vorne, geöffnet sind. Nach dem Aufsetzen des Dachkoffers 4 wird er in Richtung des Pfeils 7 in Fig. 1 nach rechts geschoben, sodass der Zugschenkel 8 des L-förmigen Zugbügels 6 am Querträger 3 anstößt, während der abgewinkelte Klemmschenkel 9 des Zugbügels zunächst noch in Abstand unter den Querträgern 3 angeordnet ist. Der Zugbügel 6 ist mit einer durch eine aufgeschobene Hülse 10 gebildeten Außenverzahnung 11 versehen, in die ein Gegenverzahnungsteil 12 eingreifen kann, das bei der Betätigung des Spannhebels 13, also bei Verschwenkung aus der Position nach Fig. 6 in die nach Fig. 7, mit seiner Gegenverzahnung 14 an die Verzahnung 11 angedrückt und gleichzeitig angehoben wird. Hierfür sorgt ein Anhebeschieber 15, der gegen die Wirkung einer Rückholfeder 16 durch einen Nocken 17 am Spannhebel 13 nach links verschoben wird, wodurch das Gegenverzähriungeteil 12 nach oben angehoben wird. Bereits vorher ist dieses Gegenverzahnungsteil 12 durch die Nockenfläche 18 am Lagerabschnitt 19 des Spannhebels 13 in die Verzahnung 11 eingedrückt worden, wobei ein Nocken 20 des Spannhebels 13, der einen Stift 21 am Gegenverzahnungsteil übergreifen kann, dafür sorgt, dass bei der Verschwenkung des Handhebels aus der Schließstellung nach Fig. 7 in die Öffnungsstellung nach Fig. 6 das Gegenverzahnungsteil wieder von der Verzahnung 11 des Spannschenkels 8 abgehoben wird.

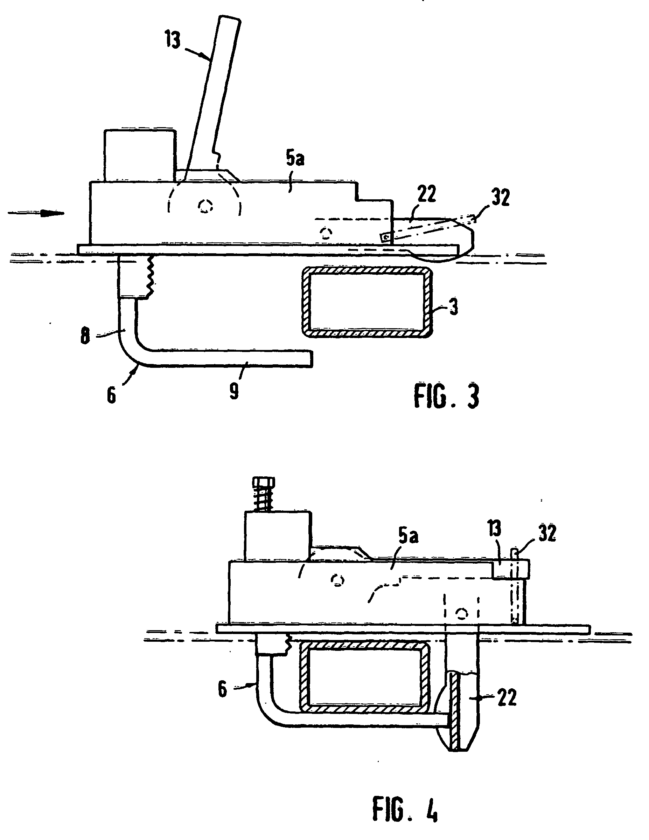

Ein ganz besonders wesentliches Teil der vorliegenden Erfindung ist der Verschluss-Schenkel 22, der die offene Seite des L-förmigen Zugbügels in der Betriebsstellung verschließt, sodass durch ihn ein Verrutschen entgegen der Aufschieberichtung 7 verhindert ist. Dieser Verschluss-Schenkel ist ein zweiarmiger Hebel, dessen kurzer innerer Hebelarm 23 eine Schulter 24 aufweist, die von einem Arretierschieber 25 der in Fig. 6 gezeigten Ruhestellung übergriffen wird. In diese Arretierstellung wird der Arretierschieber 25 durch eine Druckfeder 26 gedrückt. Am Arretierschieber 25 ist ein Arm 27 mit einem Haken 28 angeformt, der im Bewegungsweg eines Nockens 29 an der Drehwelle des Spannhebels 13 liegt. Beim Verschwenken des Spannhebels 13 aus der Ruhestellung nach Fig. 6 in die Betriebsstellung nach Fig. 7 kommt der Nocken 29 in Eingriff mit dem Haken 28 und zieht den Arretierschieber 25 gegen die Wirkung seiner Vorspannfeder 26 nach links unter Freigabe der Schulter 24. Der unter der Wirkung einer Ausschwenkfeder 30 stehende Verschluss-Schenkel 22 schwenkt daher unter der Wirkung dieser Feder nach außen in die Betriebsstellung nach Fig. 7, wobei ein Ansatz 31 am Spannhebel 13 den kurzen Innenschenkel 23 hintergreift, wie dies in Fig. 7 zu erkennen ist. Der Verschluss-Schenkel 22 ist somit in der Betriebsstellung nach Fig. 7 verriegelt. Um diese Verriegelung auch wirklich gegen Erschütterungen und die Wirkung herumrutschenden Gepäcks im Dachkoffer abzusichern, kann in an sich bekannter Weise ein in den Fig. 3 und 4 angedeuteter schwenkbarer Sicherungsbügel 32 vorgesehen sein, der den Spannhebel 13 in der Betriebsstellung nach den Fig. 4 und 7 übergreift und damit an einem Nachobenschwenken hindert.

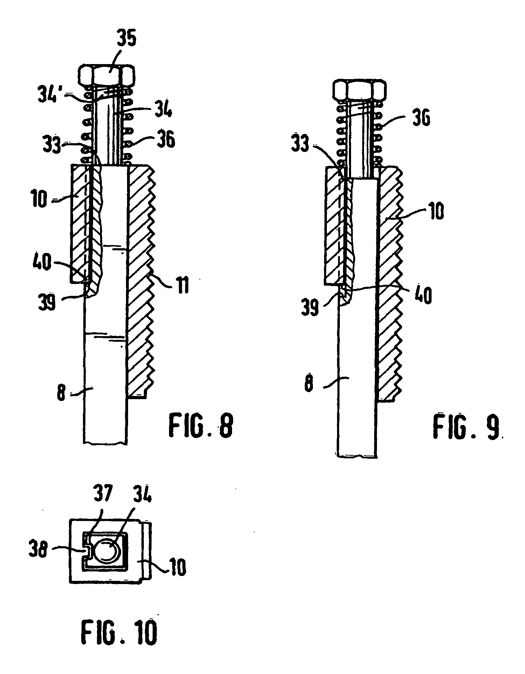

Der Zugschenkel 8 des L-förmigen Zugbügels 6 ist ebenso wie der Klemmschenkel 9 querschnittlich rechteckförmig, vorzugsweise quadratisch, ausgebildet und lediglich an seinem inneren Ende unter Bildung einer Schulter 33 verjüngt ausgebildet, wobei der verjüngte Abschnitt 34 im gezeigten Ausführungsbeispiel zylindrisch ist, also einen runden Querschnitt aufweist. Auf sein Ende ist ein Gewindeabschnitt 34' aufgebracht, auf den eine Mutter 35 unter Bildung eines Kopfes aufgeschraubt werden kann, zwischen dem sich und der auf den Zugschenkel 8 aufgeschobenen Kunststoffhülse 10 mit der Außenverzahnung 11 eine Wendeldruckfeder 36 abstützt. Diese Wendeldruckfeder 36 verspannt den Zugschenkel 8, der mit einer Führungsnut 37 versehen ist, in die eine Führungsrippe 38 der Kunststoffhülse 10 eingreift, so, dass die am Ende der Führungsrinne 37 angeordnete Schulter 39 am entsprechenden unteren Ende 40 der Rippe 38 anliegt, wie dies in Fig. 8 gezeigt ist. Bei einer Überlastung der Klemmspannung des Klemmschenkels 9 an der Unterseite des Querträgers 3 wird die Druckfeder 36 entsprechend zusammengedrückt, sodass der Spannschenkel 8 sich gegen die Wirkung dieser Druckfeder 36 nach unten herausbewegen kann, sodass kein Abbrechen oder Verbiegen des Zugbügels auftritt, sondern eine elastische federnde Verspannung entsprechend der Federstärke der Druckfeder 36. Der rechteckige Querschnitt des Zugbügels 6, insbesondere seines Zugschenkels 8, garantiert - in Verbindung mit der entsprechenden Rechteckform der Führungsdurchbrechung 44 des Trägerteils 5a für die Hülse 10 und deren rechteckige Innenform - die gleichbleibende Orientierung des Klemmschenkels 9 in die gewünschte Aufschieberichtung.

Die Erfindung ist nicht auf das dargestellte Ausführungsbeispiel beschränkt. So wäre es insbesondere auch möglich, dass der Spannhebel über den schwenkbar oder horizontal verschiebbar gelagerten Zugbügel betätigt und ver- bzw. entriegelt wird. Zu diesem Zweck könnte beispielsweise vorgesehen sein, dass der entsprechend schwenkbare oder horizontal verschiebbare Zugbügel 8 mit dem Arretierschieber 25 verbunden ist, sodass er statt durch die Verkopplung mit dem Handhebel, oder gegebenenfalls auch zusätzlich dazu, durch das Anstoßen des Zugbügels, hier des gezähnten Lagerungsabschnitts 11, am Querträger betätigt wird.

## Patentansprüche

1. Halterungsvorrichtung zur lösbaren, verstellbaren Schnellhalterung eines Dachkoffers an auf einem Fahrzeugdach befestigten Querträgern, mit den Boden des Dachkoffers (4) durchsetzenden nach oben verspannbaren, die Querträger (3) mit einem abgewinkelten Klemmschenkel (9) untergreifenden Zugbügeln (6), wobei ein mit einer Außenverzahnung (11) versehener Zugschenkel (8) des Zugbügels (6) durch einen mit einem Gegenverzahnungsteil (12) zusammenwirkenden, an einem gemeinsamen Trägerteil (5a) im Inneren des Dachkoffers (4) gelagerten, Spannhebel (13) nach oben anhebbar und dabei in der angehobenen Stellung verriegelbar ist, **dadurch gekennzeichnet, dass** der Zugbügel (6) ein L-Bügel ist und dass am Trägerteil (5a) ein durch einen Bodenschlitz vor das freie Ende des Klemmschenkels (9) ausschwenkbarer und in dieser Stellung verriegelbarer Verschluss-Schenkel (22) gelagert ist, der über den Spannhebel (13) oder den schwenkbar oder horizontal verschiebbar gelagerten Zugbügel betätigt und ver- bzw. entriegelt wird.

2. Halterungsvorrichtung nach Anspruch 1, **dadurch gekennzeichnet, dass** der durch eine Feder (30) in die Ausschwenkstellung vorgespannte Verschluss-Schenkel (22) ein zweiarmiger Hebel ist, dessen kurzer Innenschenkel (23) von einem federnd in die Sperrstellung vorgespannten Arretierschieber (25) übergriffen wird, der durch die Verschwenkung des Spannhebels (13) in die Spannstellung in eine Freigabestellung verschiebbar ist.

3. Halterungsvorrichtung nach Anspruch 1 oder 2, **dadurch gekennzeichnet, dass** ein Verriegelungsansatz (31) des Spannhebels (13) in der Spannstellung den kurzen Innenschenkel (23) des Verschluss-Schenkels (22) verriegelnd hintergreift.

4. Halterungsvorrichtung nach einem der Ansprüche 1 bis 3, **dadurch gekennzeichnet, dass** das freie Ende des Klemmschenkels (9) in eine, vorzugsweise nutförmige, Vertiefung (41) des Verschluss-Schenkels (22) eingreift.

5. Halterungsvorrichtung nach einem der Ansprüche 1 bis 4, **dadurch gekennzeichnet, dass** der Spannhebel (13) mit Nocken (17, 20) zur Betätigung eines Anhebeschiebers (15) für das Gegenverzahnungsteil (12) entgegen einer Rückholfeder (43) sowie zu dessen Abheben aus der Eingriffsverzahnung versehen ist.

6. Halterungsvorrichtung nach einem der Ansprüche 1 bis 5, **dadurch gekennzeichnet, dass** die Außenverzahnung des Zugbügels (6) durch eine gleitend verschiebbar auf dem glatten Zugschenkel (8) angeordnete, vorzugsweise aus Kunststoff bestehende, Hülse (10) mit angeformten Zähnen (11) gebildet ist, und dass der Zugschenkel (8) durch eine sich zwischen einem endseitigen Kopf (35) und der Hülse (10) abstützende Druckfeder (36) mit einer Schulter (39) an einen Endbegrenzungsanschlag (40) seines Verschiebeweges in der Hülse (10) verspannt ist.

7. Halterungsvorrichtung nach Anspruch 6, **dadurch gekennzeichnet, dass** der einen rechteckigen Querschnitt aufweisende Zugbügel (6) am freien inneren Ende des Zugschenkels (8) mit einem, vorzugsweise verjüngten, Abschnitt (34) mit einem endseitigen Gewinde (34') für eine den Kopf bildende Schraubmutter (35) versehen ist.

8. Halterungsvorrichtung nach Anspruch 7, **dadurch gekennzeichnet, dass** der Zugschenkel (8) eine Führungsnut (37) für eine Führungsrippe (38) an der Hülse (10) aufweist, deren Endschulter (39) durch die Druckfeder (36) an die Endfläche (40) der Führungsrippe (38) angedrückt wird.

9. Halterungsvorrichtung nach einem der Ansprüche 1 bis 7, **gekennzeichnet durch** einen verschwenkbaren Sicherungsbügel (32) für den Spannhebel (13).

## Claims

1. Fastening device for the detachable, adjustable quick mounting of a roof box on transverse supports fixed to a vehicle roof, having tie shackles (6) which penetrate the base of the roof box (4), are braceable at the top, and which engage under the transverse supports (3) with a clamping arm (9) bent at an angle, wherein a tie arm (8) of the tie shackle (6) provided with male splining (11) may be lifted upwards and is lockable in the raised position by a clamping lever (13) which cooperates with a countersplined part (12) and is mounted on a common support part (5a) inside the roof box (4), **characterised in that** the tie shackle (6) is an L-shaped shackle and **in that** on the support part (5a) a lock arm (22) is mounted, which may be pivoted out through a slot in the base in front of the free end of the clamping arm (9) and is lockable in this position and which is actuated and is locked and unlocked via the clamping lever (13) or the pivotably or horizontally displaceably mounted tie shackle.

2. Fastening device according to claim 1, **characterised in that** the lock arm (22) biased by a spring (30) into the pivoted-out position is a two-armed lever, whose short inner arm (23) is overlapped by a locking bolt (25) which is biased resiliently in the locking position and which is displaceable into a release position by the pivoting of the clamping lever (13) into the clamping position.

3. Fastening device according to claim 1 or 2, **characterised in that** a locking catch (31) of the clamping lever (13) engages lockingly in the clamping position behind the short inner arm (23) of the lock arm (22).

4. Fastening device according to one of claims 1 to 3, **characterised in that** the free end of the clamping arm (9) engages in a preferably groove-shaped recess (41) of the lock arm (22).

5. Fastening device according to one of claims 1 to 4, **characterised in that** the clamping lever (13) is provided with cams (17, 20) for actuation of a lifting bolt (15) for the countersplined part (12) against a restoring spring (43) and for lifting thereof out of the engaging splining.

6. Fastening device according to one of claims 1 to 5, **characterised in that** the male splining of the tie shackle (6) is formed by a slidingly displaceable, preferably plastics sleeve (10) disposed on the smooth tie arm (8) and having integral teeth (11), and **in that** the tie arm (8) is braced, by a pressure spring (36) bearing between a head (35) on the end face and the sleeve (10), with a shoulder (39) on an end limit stop (40) of its displacement distance in the sleeve (10).

7. Fastening device according to claim 6, **characterised in that** the tie shackle (6) having a rectangular cross-section is provided at the free inner end of the tie shackle (8) with a preferably tapered section (34) with an end-face thread (34') for a screw nut (35) forming the head.

8. Fastening device according to claim 7, **characterised in that** the tie arm (8) has a guide groove (37) for a guide ridge (38) on the sleeve (10), whose end shoulder (39) is pressed by the pressure spring (36) against the end face (40) of the guide ridge (38).

9. Fastening device according to one of claims 1 to 7, **characterised by** a pivotable fixing shackle (32) for the clamping lever (13).

## Revendications

1. Dispositif de fixation pour la fixation rapide, amovible et réglable d'un coffre de toit sur des traverses fixées à un toit de véhicule, avec des brides de traction (6) traversant le fond du coffre de toit (4), pouvant être tendues vers le haut et saisissant par-dessous les traverses (3) avec une branche de serrage (9) coudée, une branche de traction (8), pourvue d'une denture extérieure (11), de la bride de traction (6) pouvant être soulevée vers le haut par un levier de serrage (13) coopérant avec une partie de contre-denture (12) et logée sur une partie support (5a) commune à l'intérieur du coffre de toit (4) et pouvant être verrouillée alors dans la position soulevée, **caractérisé en ce que** la bride de traction (6) est une bride en L et **en ce qu'**une branche de fermeture (22) pouvant basculer vers l'extérieur à travers une fente de fond devant l'extrémité libre de la branche de serrage (9) et pouvant être verrouillée dans cette position étant logée sur la partie support (5a), laquelle branche est actionnée et verrouillée ou déverrouillée au moyen du levier de serrage (13) ou de la bride de traction pouvant être logée de façon basculante ou coulissante horizontalement.

2. Dispositif de fixation selon la revendication 1, **caractérisé en ce que** la branche de fermeture (22) pré-tendue par un ressort (30) dans la position de basculement vers l'extérieur est un levier à deux bras, dont la branche intérieure (23) courte est recouverte par un curseur d'arrêt (25) pré-tendu de façon élastique dans la position de blocage, lequel peut être déplacé par le basculement du levier de serrage (13) dans la position de serrage dans une position de libération.

3. Dispositif de fixation selon la revendication 1 ou 2, **caractérisé en ce qu'**une saillie de verrouillage (31) du levier de serrage (13) saisit par l'arrière la branche intérieure (23) courte de la branche de fermeture (22) en la verrouillant dans la position de serrage.

4. Dispositif de fixation selon l'une quelconque des revendications 1 à 3, **caractérisé en ce que** l'extrémité libre de la branche de serrage (9) s'engage dans une cavité (41), de préférence en forme de rainure, de la branche de fermeture (22).

5. Dispositif de fixation selon l'une quelconque des revendications 1 à 4, **caractérisé en ce que** le levier de serrage (13) est pourvu de cames (17, 20) pour l'actionnement d'un curseur de soulèvement (15) pour la partie de contre-denture (12) dans le sens contraire à un ressort de rappel (43) ainsi que pour son soulèvement de la denture d'engagement.

6. Dispositif de fixation selon l'une quelconque des revendications 1 à 5, **caractérisé en ce que** la denture extérieure de la bride de traction (6) est formée par une douille (10) disposée sur la branche de traction (8) lisse de façon déplaçable et coulissante, de préférence en plastique, avec des dents (11) formées dessus et **en ce que** la branche de traction (8) est tendue par un ressort de pression (36) s'appuyant entre une tête (35) côté extrémité et la douille (10) avec un épaulement (39) sur une butée de délimitation finale (40) de sa course de déplacement dans la douille (10).

7. Dispositif de fixation selon la revendication 6, **caractérisé en ce que** la bride de traction (6) présentant une section rectangulaire est pourvue sur l'extrémité intérieure libre de la branche de traction (8) d'une section (34), de préférence rétrécie, avec un filetage (34') côté extrémité pour un écrou à visser (35) formant la tête.

8. Dispositif de fixation selon la revendication 7, **caractérisé en ce que** la branche de traction (8) présente une rainure de guidage (37) pour une nervure de guidage (38) sur la douille (10), dont l'épaulement final (39) est appuyé par le ressort de pression (36) sur la surface d'extrémité (40) de la nervure de guidage (38).

9. Dispositif de fixation selon l'une quelconque des revendications 1 à 7, **caractérisé par** une bride de blocage (32) pivotante du levier de serrage 13.
